Europäisches Patentamt

**European Patent Office**

Office européen des brevets

(11) Numéro de publication: **0 190 971**
A2

(12) # DEMANDE DE BREVET EUROPEEN

(21) Numéro de dépôt: **86400206.8**

(22) Date de dépôt: **31.01.86**

(51) Int. Cl.⁴: **A 23 L 1/317**

(30) Priorité: 31.01.85 FR 8501359
14.11.85 FR 8516843

(43) Date de publication de la demande:
13.08.86 Bulletin 86/33

(84) Etats contractants désignés:
BE CH DE FR IT LI NL SE

(71) Demandeur: **Brulé, Joseph**
**Le Bourg**
**F-55150 Couffe Ancenis(FR)**

(72) Inventeur: **Brulé, Joseph**
**Le Bourg**
**F-55150 Couffe Ancenis(FR)**

(74) Mandataire: **Lemonnier, André**
**4 Boulevard Saint-Denis**
**F-75010 Paris(FR)**

(54) **Produit alimentaire à base de viande blanche hachée.**

(57) La présente invention a pour objet un produit alimentaire à base de viande blanche hachée telle que viande de veau ou de volailles.

Ce nouveau produit est constitué par un mélange contenant en poids plus de cinquante pour cent de viande de veau ou de volailles maigre hachée avec en outre du gras de veau et/ou de porc, des épices et des condiments, et des liquides alcoolisés et conformément à l'invention, le gras est introduit dans le mélange à l'état d'émulsion fine ce qui donne au mélange la propriété de retenir les liquides alcoolisés ceux-ci n'exsudant avec les gras qu'au moment de la cuisson.

Le nouveau produit est assimilable à des paupiettes de veau mais assure à la cuisson l'exsudation des constituants d'une sauce.

EP 0 190 971 A2

Croydon Printing Company Ltd.

1

## Produit alimentaire à base de viande blanche hachée.

La présente invention concerne un produit alimentaire à base
de viande blanche hachée, telle que viande de veau et viande
de volailles.

En alimentation, on connaît les produits dits "paupiettes
de veau" constitués par une escaloppe de veau roulée garnie
d'une farce. La consommation des paupiettes de veau est relativement faible en raison, d'une part, du temps nécessaire pour
leur fabrication qui ne peut s'effectuer qu'au stade artisanal,
la cadence actuelle étant au maximum de 9 kg par heure d'ouvrier,
ce qui entraîne un prix de vente élevé et, d'autre part, de
la durée de préparation et de cuisson qui représente une heure
et demie à deux heures en raison notamment de la nécessité
de cuisiner la sauce par réduction de divers produits.

On connaît des produits alimentaires à base de viande hachée
obtenus par remplissage, avec des compositions variées dites "appareils", de boyaux dits "menus" naturels ou artificiels.
On a déjà fabriqué dans cette classe des produits, notamment
des saucisses à base de viande de porc, dans lesquels on a
incorporé à l'appareil, avant le remplissage du menu, des
liquides alcoolisés et notamment des vins blancs. Les liquides
ainsi incorporés dans les saucisses de porc diffusent et s'évaporent à travers la paroi du boyau et, à la cuisson, on retrouve seulement, dans la graisse fondue qui suinte du boyau entourant le produit, une faible partie des essences aromatiques
du liquide ajouté à la farce. Il paraissait donc impossible
d'incorporer à la fabrication aux farces et appareils remplissant des menus, des liquides qui, par diffusion, simultanément
avec les graisses, à travers la paroi du boyau, au moment
de la cuisson, étaient susceptibles de fournir directement
une sauce type sauce madère telle que celle qui accompagne
habituellement les paupiettes de veau. Cette impossibilité
paraissait  encore plus certaine dans le cas où le produit
alimentaire à base de viande hachée est façonné sans être
enfermé dans un boyau.

La présente invention résulte de la constatation, non évidente
pour l'homme de métier,  que le stade essentiel du procédé
de fabrication pour obtenir la rétention dans l'appareil des
liquides alcoolisés et des essences des condiments, était le
hachage et broyage des gras jusqu'à obtention d'une émulsion
fine, la viande maigre hachée et mélangée à l'émulsion des
gras étant une viande dite blanche, essentiellement de la
viande de veau, mais aussi éventuellement de la viande de
volailles.

Le pouvoir de rétention des liquides alcoolisés tels que vin
blanc, madère, alcools et autres par le mélange de gras émulsionnés et de viande blanche hachée est tel que l'appareil
peut être enfermé dans un boyau peu perméable tel qu'un menu
de porc mais l'appareil en lui-même peut constituer le nouveau
produit alimentaire commercialisé après simple formage en pavés ou en pains. Lors de la cuisson les graisses, les liquides alcoolisés et les essences des condiments exsudent pour assurer automatiquement la formation de la sauce.

La présente invention a en conséquence pour objet un nouveau produit alimentaire à base de viande blanche hachée contenant en poids plus de cinquante pour cent de viande blanche hachée avec en outre du gras de veau et/ou de porc, des épices et des condiments, et des liquides alcoolisés, caractérisé en ce que le gras est incorporé dans le mélange à l'état d'une émulsion fine.

Selon une autre caractéristique le mélange est utilisé comme appareil et conditionné dans un menu de porc ou autre boyau naturel ou artificiel présentant une porosité équivalente.

La composition en poids du mélange est sensiblement la suivante:

| | |
|---|---|
| Viande blanche maigre | 50 à 70% |
| Gras de veau et/ou de porc | 18 à 30% |
| Liquides alcoolisés | 5 à 15% |
| Sel | 2% |
| Poivre | 0,2% |
| Autres condiments | suivant saveur recherchée. |

Le nouveau produit alimentaire peut être cuisiné en une durée réduite de l'ordre de 15 minutes par simple chauffage dans une poêle ou récipient analogue.

La graisse et les liquides qui exsudent, ensemble avec les essences des condiments, donnent directement la sauce qui accompagne habituellement les paupiettes de veau.

Pour la fabrication industrielle avec commercialisation dans les grandes surfaces ou analogue, le produit peut être précuit et utilisable par simple réchauffage. Il est toutefois nécessaire dans ce cas et en raison de l'exsudation des graisses et des liquides alcoolisés qui se produirait à la cuisson, que celle-ci soit effectuée au bain-marie ou par cuisson à la vapeur sur un produit emballé sous vide par thermo-formage afin que l'enveloppe exerce sur le produit une pression empêchant l'exsudation des ingrédients de la sauce, cette exsudation n'ayant lieu qu'au réchauffage après extraction du produit de son emballage sous vide.

Pour la présentation du produit, il est préférable que celui-ci constitué de viandes blanches et de gras présente une coloration brune obtenue en termes culinaires par le "croûtage". La cuisson qui, pour les motifs ci-dessus exposés et du fait de l'emballage dans un produit thermo-formable, est effectuée au bain-marie ne permet pas d'obtenir le croûtage. Il a toutefois été trouvé qu'il était possible d'obtenir un croûtage ou cuisson de la couche de surface du produit conforme à l'invention sans exsudation des graisses et liquides alcoolisés en exposant pendant une courte durée à un rayonnement infra-rouge le produit mis en forme dont la température de la masse interne a été suffisamment abaissée.

Le procédé de fabrication du produit alimentaire cuit conforme à l'invention comporte ,après hachage et préparation du mélange, un formage sous forme de portions, un passage au tunnel de froid pour bloquer la forme, un croûtage de surface par exposition à un rayonnement infra-rouge, un nouveau passage au tunnel de froid pour rebloquer le produit dans la forme et sa composition, un enveloppage sous vide dans une pellicule thermo-formée, une cuisson sous vide au bain-marie ou tout autre type de cuisson à la vapeur et un refroidissement rapide.

On décrira, à titre d'exemple, ci-après une composition d'appareil conforme à l'invention:

Pour obtenir 100 kg de produit net vendable, on a utilisé une composition ou appareil contenant en poids.

| | |
|---|---|
| Viande de veau maigre | 67,5 kg |
| Gras de veau et/ou de porc | 22,5 kg |
| Echalotes | 3,6 kg |
| Ail | 0,18 kg |
| Persil | 0,63 kg |
| Sel | 1,80 kg |
| Poivre | 0,18 kg |
| Muscade | 0,18 kg |
| Fine champagne | 1,80 kg |
| Madère | 3,60 kg |
| Vin blanc | 7,20 kg |
| soit au total | 109,17 kg |

La préparation du produit a été effectuée comme suit:

On désosse et pare un avant de veau, on trie le gras, les petits morceaux de maigre dits "hachages" et les belles pièces maigres. On hache ensuite au broyeur ou au hachoir à couteaux dit "cutter".

Dans le cas de l'utilisation d'un broyeur, on hache les hachages, les gras, les échalotes, l'ail, le persil et la muscade avec une grille fine jusqu'à obtention d'une émulsion fine et on hache avec une grosse grille les belles pièces. On mélange ensuite au mélangeur l'émulsion fine des produits hachés à la grille fine avec le sel et le poivre et on ajoute la fine champagne et le madère puis le hachage des belles pièces à la grosse grille. On ajoute le vin blanc et on poursuit le malaxage jusqu'à absorption complète du vin par l'appareil de manière à obtenir une bonne liaison souple.

Dans le cas du hachage au hachoir à couteaux dit "cutter" on met dans la cuve les hachages et le gras en ajoutant l'ail, les échalotes, le persil et la muscade. Après hachage menu on ajoute le gros sel et le poivre et on hache à nouveau pendant trois à quatre tours de cuve jusqu'à obtention d'une emulsion fine après quoi on ajoute les belles pièces maigres et on laisse tourner le hachoir pendant environ quatre tours en mouillant à la fine champagne et au madère. Le vin est ajouté pendant le travail de l'appareil au mélangeur jusqu'à absorption complète du vin et obtention d'une bonne liaison souple.

L'appareil obtenu dans l'un ou l'autre cas peut être embossé avec un poussoir dans des menus de porc ou boyaux artificiels ayant une perméabilité analogue. Il peut également être commercialisé à l'état cru, après simple formage en pavés ou en pains ou être précuit après emballage sous vide par thermo-formage.

Le produit présenté embossé dans un menu de porc perd au stockage par dessication environ 8,5% de son poids mais les essences, aromes et alcools sont retenus dans l'appareil et libérés à la cuisson avec les graisses des gras.

La composition de l'appareil donnée ci-dessus à titre d'exemple est susceptible de diverses modifications notamment dans la nature et le pourcentage des condiments et liquides alcoolisés. C'est ainsi notamment qu'il est possible d'y incorporer du fromage genre gruyère ou autres.

**REVENDICATIONS**

1. Un nouveau produit alimentaire à base de viande blanche hachée contenant en poids plus de cinquante pour cent de viande blanche hachée avec en outre du gras de veau et/ou de porc, des épices et des condiments, et des liquides alcoolisés, caractérisé en ce que le gras est incorporé dans le mélange à l'état d'une émulsion fine.

2. Un nouveau produit alimentaire selon la revendication 1, caractérisé en ce que la composition en poids du mélange est :

| | |
|---|---|
| Viande blanche maigre | 50 à 70% |
| Gras de veau et/ou de porc | 18 à 30% |
| Liquides alcoolisés | 5 à 15% |
| Sel | 2% |
| Poivre | 0,2% |
| Autres condiments | suivant saveur recherchée. |

3. Un nouveau produit alimentaire selon l'une quelconque des revendications 1 et 2, caractérisé en ce que le mélange est utilisé comme appareil et conditionné dans un menu de porc ou autre boyau naturel ou artificiel présentant une porosité équivalente.

4. Un nouveau produit alimentaire selon l'une quelconque des revendications 1 et 2, caractérisé en ce que le produit est emballé sous vide par thermo-formage et précuit au bain-marie ou par cuisson à la vapeur.

5. Un procédé de fabrication du nouveau produit alimentaire selon la revendication 4, caractérisé en ce qu'il comporte, après hachage et préparation du mélange, un formage sous forme de portions, un passage au tunnel de froid pour bloquer la forme, un croûtage de surface par exposition à un rayonnement infra-rouge, un nouveau passage au tunnel de froid pour rebloquer le produit dans la forme et sa composition, un enveloppage sous vide dans une pellicule thermo-formée, une cuisson sous vide au bain-marie ou tout autre type de cuisson à la vapeur et un refroidissement rapide.